# EUROPÄISCHE PATENTANMELDUNG

(11) **EP 1 465 045 A2**
(43) Veröffentlichungstag der Anmeldung: **06.10.2004**
(21) Anmeldenummer: 04003880.4
(22) Anmeldetag: 20.02.2004
(51) Int. Cl.: G06F 1/20, G06F 1/18

(54) **Computergehäuse**

(30) Priorität: 04.04.2003 DE 10315520
(71) Anmelder: Fujitsu Siemens Computers GmbH, 80807 München (DE)
(72) Erfinder: Ebersold, Zoran, 86165 Augsburg (DE)
(74) Vertreter: Epping, Hermann, Fischer

(57) **Zusammenfassung**

Die Erfindung betrifft ein Computergehäuse (1) mit einer Bodenwandung (2), vier Seitenwandungen (4) und einer Deckenwandung (5), wobei das Computergehäuse (1) so ausgebildet ist, daß innerhalb zumindest einer Wandung (2) Kühlluft geführt wird. Die Wandung (2) ist als Hohlprofil ausgebildet und weist einen Adapter (3) auf, in den die Luft aus Hohlschächten (21) des Hohlprofils der Wandung (2) geführt wird. Über eine in einer vergrößerten Ausbildung des Adapters (3) angeordneten Luftaustrittsöffnung (31) wird erwärmte Luft in die Luftansaugöffnung (71) eines Lüfters (7) geführt und vom Lüfter (7) an die Umgebung abgegeben.

## Beschreibung

Die Erfindung betrifft ein Computergehäuse mit einer Bodenwandung, vier Seitenwandungen und einer Deckenwandung.

Moderne Computersysteme weisen mit fortschreitender Entwicklung eine immer höhere Rechenleistung auf, mit der proportional auch die Verlustleistung der elektronischen Schaltkreise steigt. Aufgrund der immer höheren Integrationsdichte in elektronischen Schaltungen, sowie immer höherer Taktraten in den elektronischen Schaltungen, ist die Entstehung von Verlustwärme zunehmend problematisch. Während Mikroprozessoren von Computersystemen noch vor einigen Jahren mit passiven Komponenten gekühlt werden konnten, beispielsweise mit Kühlkörpern und durch natürliche Konvektion der Luft, erfordern heutige Prozessoren in handelsüblichen PC- oder Notebook-Systemen aktive, üblicherweise elektrisch betriebene Lüfter zur Ableitung der entstehenden Verlustwärme. Auch die in Netzteilen, Speicherbausteinen und Laufwerken von Computersystemen erzeugte Verlustwärme muß häufig durch zusätzliche Komponenten, wie beispielsweise Lüfter oder sogenannte Heatpipes abgeführt werden.

Um eine unzulässige Temperaturerhöhung der betroffenen Komponenten und damit eine mögliche Zerstörung sowie weitere Folgeschäden zu verhindern, ist eine Abführung anfallender Verlustwärme unbedingt erforderlich. Die zur Kühlung mit einzelnen Komponenten, beispielsweise Mikroprozessoren, verbundenen Kühlkörper reichen jedoch oftmals nicht aus, die in hohem Maβe erzeugte Wärme an die Umgebung abzuführen.

Standard-Computergehäuse sind in der Regel so konzipiert, daß sie neben Komponenten aufweisende Kühlkörper im Gehäuse zusätzlich, in der Regel in der Nähe hitzeentwickelnder Komponnenten angeordnete Lüfter aufweisen. Die Lüfter saugen die Luft über im Gehäuse befindliche Luftschlitze an und führen diese nach erfolgter Luftzirkulation und Weiterleitung an die zu kühlende Komponente über Luftaustrittsöffnungen des Gehäuses wieder an die Umgebung ab.

Obwohl die den Computer umgebende Luft kühler ist als die Systemluft innerhalb des Computers ist mit zunehmender Leistung und hierdurch bedingte erhöhte Wärmeabgabe der Komponenten die Abführung der Wärme und somit der Wirkungsgrad des Kühlsystems oftmals nicht ausreichend, um die Verlustwärme in dem Maße abzuführen, daß die Systemwärme keine Ausfälle der Komponenten der eingangs beschriebenen Art verursacht. Die Sicherstellung einer ausreichenden Kühlung mittels Vergrößerung der auf den Komponenten angebrachten Kühlkörper und zusätzlich vorzusehender Lüfter ist aber aus konstruktiven und technischen Gründen nicht wünschenswert oder nicht möglich.

Die Aufgabe der vorliegenden Erfindung ist es daher, ein Computergehäuse dergestalt weiterzuentwickeln, das mit möglichst geringem Aufwand eine ausreichende Kühlung der in dem Computer integrierten Komponenten erzielt ist.

Diese Aufgabe wird durch ein Computergehäuse mit einer Bodenwandung, vier Seitenwandungen und einer Deckenwand gelöst, bei dem innerhalb zumindest einer Wandung Kühlluft geführt wird.

In vorteilhafter Weise wird hierbei in einem Computergehäuse zumindest eine Wandung, beispielsweise die Bodenwandung, als Hohlprofil mit zumindest einem Hohlschacht ausgebildet. Wird beispielsweise eine Leiterplatte mit hitzeentwickelnden Komponenten unmittelbar über der Bodenwandung im Gehäuseinneren angeordnet, wird aufgrund der Führung des von außen angesaugten Luftstroms durch das Hohlprofil und somit einer Kühlung über die gesamte Fläche der Bodenwandung eine sehr gute thermische Ableitung der Verlustwärme der auf der Leiterplatte angeordneten Komponenten erzielt.

Durch die vorteilhafte Ausgestaltung des Hohlprofils kann eine große Anzahl an Hohlschächten vorgesehen werden, die die Zuluft in einzelnen Strömungskanälen führen und den Wirkungsgrad der Wärmeableitung wesentlich erhöhen.

In vorteilhafter Weise weist das Hohlprofil einen Adapter auf, in den die aus den Hohlschächten geführte Luft einströmt und über eine im Adapter befindliche Luftaustrittsöffnung in eine Luftansaugöffnung eines Lüters geführt wird. Die Luftaustrittsöffnung des Adapters ist luftdicht und formschlüsig mit der Luftansaugöffnung des Lüfters verbunden, so daß sichergestellt ist, daß die in den Hohlschächten erwärmte Luft nicht in das Systeminnere eindringt.

Günstigerweise kann der Adapter in beliebiger Form als Hohlprofil ausgelegt sein, in dem sich die aus den Hohlschächten der Wandung ausströmende Luft sammelt und durch eine Umlenkung der Strömungsrichtung die Luft innerhalb des Adapters der Luftansaugöffnung des Lüfters zugeführt wird, so daß dieser sie nach außen abführt.

Das vorgeschlagene Computergehäuse kann für jegliche Ausführungsarten von Computern Verwendung finden. Hierbei ist besonders vorteilhaft, daß in Abhängigkeit der Architektur des Computer-Innenraums die die Kühlluft führende Wandung als diejenige Gehäusewand vorgesehen werden kann, an der eine Leiterplatte befestigt ist. Hierbei kann die Anordnung der Leiterplatte und der auf der Leiterplatte befindlichen Komponenten so gewählt werden, daß die Komponenten beispielsweise über auf den Komponenten angebrachte Kühlkörper einen thermischen Kontakt mit der die Kühlluft führenden Wandung aufweisen. Insbesondere wenn die hitzeentwickelnden Komponenten auf der Lötseite der Platine aufgebracht sind, kann über sogenannte "Heatpipes" der Kühlkörper ein sehr effektiver Wärmeaustausch zwischen der Wandung und der Komponente erzielt werden.

Weitere vorteilhafte Ausgestaltungen sind in den Unteransprüchen angegeben.

Die Erfindung wird nachfolgend anhand von Ausführungsbeispielen unter Bezugnahme auf die Figuren näher beschrieben. Es zeigen:
- Figur 1: eine schematische Schrägansicht eines erfindungsgemäßen Computergehäuses mit einer kühlluftgeführten Wandung,
- Figur 2: eine Draufsicht einer einer Wandung zugeordneten Innenseite eines Adapters,
- Figur 3: eine Explosionsdarstellung der in Figur 1 dargestellten Wandung und zugeordnetem Adapter,
- Figur 4: eine weitere Ausführungsform des erfindungsgemäßen Computergehäuses,
- Figur 5: eine Schnittdarstellung eines Computers mit einer in einem Computergehäuse als Hohlprofil ausgeführten Bodenwandung,
- Figur 6: eine Schnittdarstellung eines weiteren Computers mit einer in einem Computergehäuse als Hohlprofil ausgeführten Deckenwandung,
- Figur 7a - 7d: ein Ausführungsbeispiel einer Wandung des erfindungsgemäßen Computergehäuses und
- Figur 8a - 8d: ein weiteres Ausführungsbeispiel einer Wandung des erfindungsgemäßen Computergehäuses.

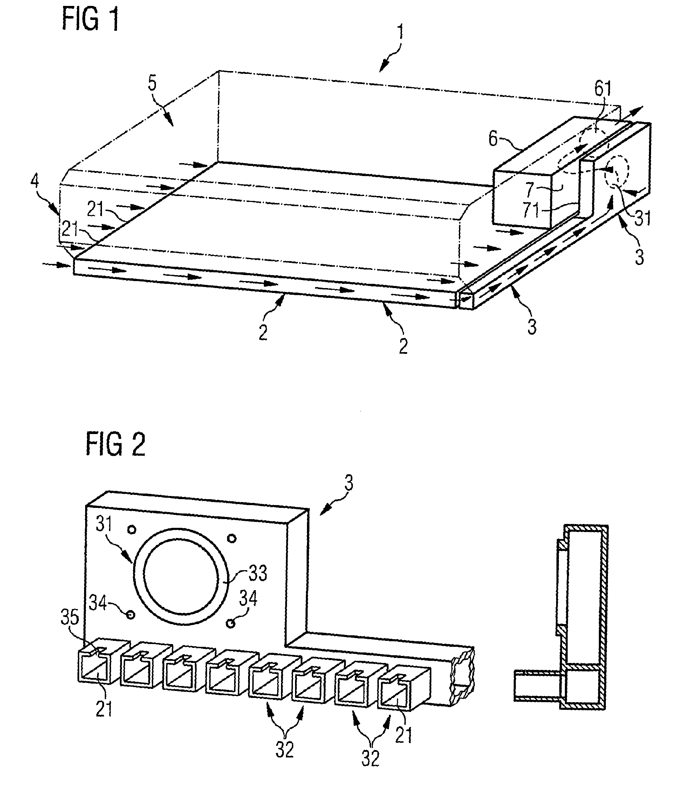

Die Figur 1 zeigt in schematischer Schrägansicht ein teilweise dargestelltes Computergehäuse 1, wobei lediglich die Kühlluft führenden Gehäuseteile, hier in Form einer Bodenwandung 2 und eines der Bodenwandung 2 zugeordneten Adapters 3 dargestellt sind. Die Seitenwandungen 4 und Deckenwandung 5 sind zur besseren Übersicht nur durch gestrichelte Linien angedeutet.

Die in vorliegendem Computergehäuse 1 aufgezeigte Bodenwandung 2 ist als Hohlprofil ausgebildet, welches eine große Anzahl hier nicht sichtbarer Hohlschächte 21 aufweist. Üblicherweise ist unmittelbar über der Bodenwandung 2 eine hier nicht gezeigte Leiterplatte mit hitzeentwickelnden Komponenten und beispielsweise ein in einem Netzteil 6 hier nicht sichtbarer Lüfter 7 angeordnet.

Mit Pfeilen ist der Verlauf der Kühlluft dargestellt. Die Kühlluft wird durch den Lüfter 7 über Lufteintrittsöffnungen, die durch Öffnungen der Hohlschächte der Bodenwandung 2 gebildet sind, angesaugt und über die gesamte Fläche der Bodenwandung 2 innerhalb der Hohlschächte 21 geführt. Am Ende der Bodenwandung 2 geht die Kühlluft in einen auf der Stirnseite der Bodenwandung 2 angeordneten, als Hohlprofil ausgebildeten Adapter 3 über, wobei die angesaugte Kühlluft innerhalb des Adapters 3 eine Umlenkung erfährt und über eine Luftaustrittsöffnung 31 des Adapters 3 in eine hier nicht sichtbare Luftansaugöffnung 71 des Lüfters 7 geführt wird. Der Lüfter 7 bläst die angesaugte, aufgrund der Luftzirkulation und im Wärmeaustausch mit den hitzenetwickelnden Komponenten stehende erwärmte Luft aus einer hier gestrichelt dargestellten Luftaustrittsöffnung 61 des Netzteils 6 in die Umgebung. Die Größe des als Hohlprofil ausgebildeten Adapters 3 ist vom Querschnitt dergestalt zu bemessen, daß sämtliche durch die Hohlschächte 21 einströmende und erwärmte Luft aufgenommen werden kann.

Die Figur 2 zeigt die Draufsicht einer einer Wandung 2 zugeordneten Innenseite des Adapters 3. Der Adapter 3 ist als Vierkant-Hohlprofil ausgebildet, an dem eine der Anzahl der Hohlschächte 21 der Wandung 2 entsprechende Anzahl an als vierkantige Hohlprofile ausgebildete Anschlußstutzen 32 angeordnet sind. Weiterhin ist der Adapter 3 an einer Seite zur Ausbildung einer Luftaustrittsöffnung 31 verbreitert ausgebildet, so daß die über die Anschlußstutzen 32 einströmende Luft gesammelt über die Luftaustrittsöffnung 31 abgeführt werden kann. Die Luftaustrittsöffnung 31 ist mit einer Dichtung 33 umgeben, um ein luftdichtes Verschließen mit einer Ansaugöffnung 71 des im Netzteil 6 integrierten Lüfters 7 zu gewährleisten. Über Verbindungsstifte 34 wird eine feste Verbindung des Adapters 3 zu dem Netzteil 6 erzielt. Die Anschlußstutzen 32 entsprechen in ihrem Außendurchmesser dem Innendurchmesser der Hohlschächte 21 der Wandung 2 und werden in diese formschlüssig eingesetzt. Einkerbungen 35 auf den Anschlußstutzen 32 dienen dem vereinfachten Arretieren in den Hohlschächten 21 bei auftretenden Fertigungstoleranzen.

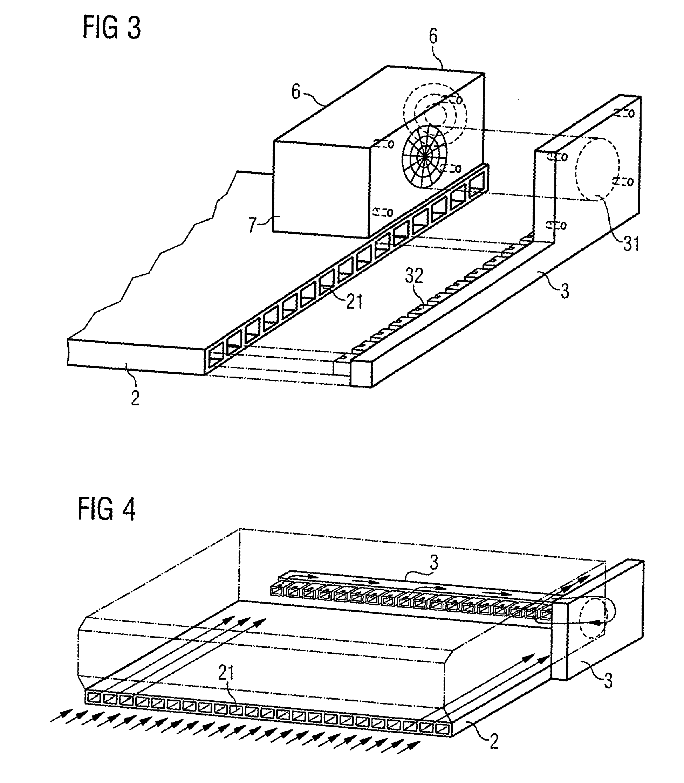

Figur 3 zeigt eine Explosionsdarstellung der in Figur 1 dargestellten Wandung 2 und zugeordnetem Adapter 3. Die die Kühlluft führenden Hohlschächte 21 und der die Kühlluft zur Luftansaugöffnung 71 des Lüfters 7 ablenkende Adapter 3 bilden ein geschlossenes System, so daß sich die erwärmte Luft mit der Luft im Systeminneren nicht austauschen kann. Der Durchmesser bzw. die Abmaße der Luftaustrittsöffnung 31 des Adapters 3 sind exakt so mit der Luftansaugöffnung 71 des Lüfters 7 bemessen, daß ein formschlüssige und luftdichte Verbindung ermöglicht ist.

Bei dem in der Figur 4 dargestellten Computergehäuse 1 ist die Bodenwandung 2 dergestalt angeordnet, daß die Luft von vorne in die Hohlschächte 21 des Hohlprofils angesaugt wird und nach hinten, wie durch die Pfeile angedeutet, zum Adapter 3 geführt wird. Die Luftströmung wird über die Anschlußstutschließend waagerecht zur Strömungsrichtung der Bodenwandung 2 in das Hohlprofil des Adapters 3. Der Adapter 3 ist in dieser Ausführungsform dergestalt ausgebildet, daß das Vierkant-Hohlprofil des Adapters 3 am Ende eine waagerecht zur Strömungsrichtung vergrößerte, die Luftaustrittsöffnung 31 aufweisende Ausbildung aufweist. Der erwärmte Luftstrom strömt durch die vergrößerte Ausbildung und wird über die Luftaustrittsöffnung 31 des Adapters 3 zum Lüfter 7 geführt.

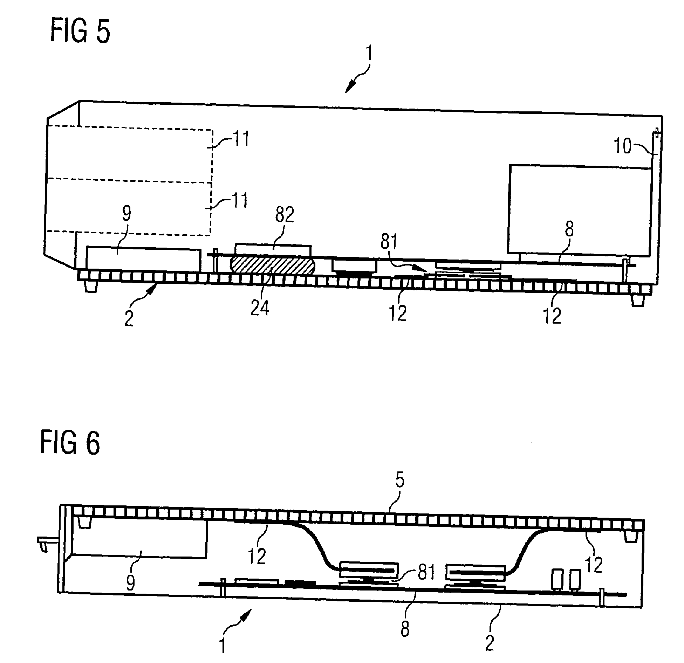

Zur Darstellung der Verwendung des erfindungsgemäßen Computergehäuses 1 ist in der Figur 5 eine Schnittdarstellung eines Computers mit einer in einem Computergehäuse 1 als Hohlprofil ausgeführten Bodenwandung 2 dargestellt. In dem Computer sind oberhalb der Bodenwandung 2 eine Leiterplatte 8 mit üblichen hitzeentwickelnden Komponenten, wie einem Prozessor 81 und sonstigen Bausteinen 82, einer Festplatte 9, einer PC-Steckkarte 10 sowie Laufwerkseinschübe 11 angeordnet.

Der Prozessor 81 und die Festplatte 9 geben im Betrieb eine erhebliche Wärme ab, so daß die Systemluft im Inneren des Computers erheblich aufgewärmt wird. Um einen besonders guten Wärmeaustausch zu erzielen, ist die Festplatte 9 unmittelbar an der Bodenwandung 2 angeordnet. Der Prozessor 81 ist auf der Unterseite der Leiterplatte 8 angeordnet, wobei Heatpipes 12 des auf dem Prozessor 81 befindlichen Kühlkörpers die Oberfläche der Bodenwandung 2 berühren und somit eine optimale Wärmeableitung ermöglichen. Der auf der Oberseite der Leiterplatte 8 angeordnete Baustein 82 kann einen Teil seiner Wärme durch die Leiterplatte 8 hindurch an die Bodenwandung 2 abgeben, dadurch daß zwischen der Bodenwandung 2 und der Leiterplatte 8 ein wärmeleitfähiges Material 24 angeordnet ist. Die Führung der Kühlluft in definierten Strömungskanälen über die gesamte Fläche der Bodenwandung 2 erlaubt somit den Wärmeaustausch sämtlicher auf der Leiterplatte 8 befindlicher Komponenten 81, 82.

In der Figur 6 ist ein weiteres Ausführungsbeispiel des erfindungsgemäßen Computergehäuses 1 dargestellt. Die Schnittdarstellung des Computers weist ein Computergehäuse 1 mit einer als Hohlprofil ausgeführten Deckenwandung 5 auf. Die Leiterplatte 8 ist an der Bodenwandung 2 befestigt, die hitzeentwickelnden Komponenten, wie zum Beispiel der Prozessor 81, sind auf der Oberseite der Leiterplatte 8 bestückt. Um eine optimale Abkühlung zu erzielen, sind die Heatpipes der auf den Prozessoren 81 angeordneten Kühlkörper mit der Hohlprofil-Deckenwandung 5 verbunden. Die Festplatte 9 ist direkt unterhalb der Deckenwandung 5 angeordnet, so daß aufgrund der Berührung der Festplatte 9 mit der Deckenwandung 5 eine Abkühlung der Festplatte 9 erzielt wird.

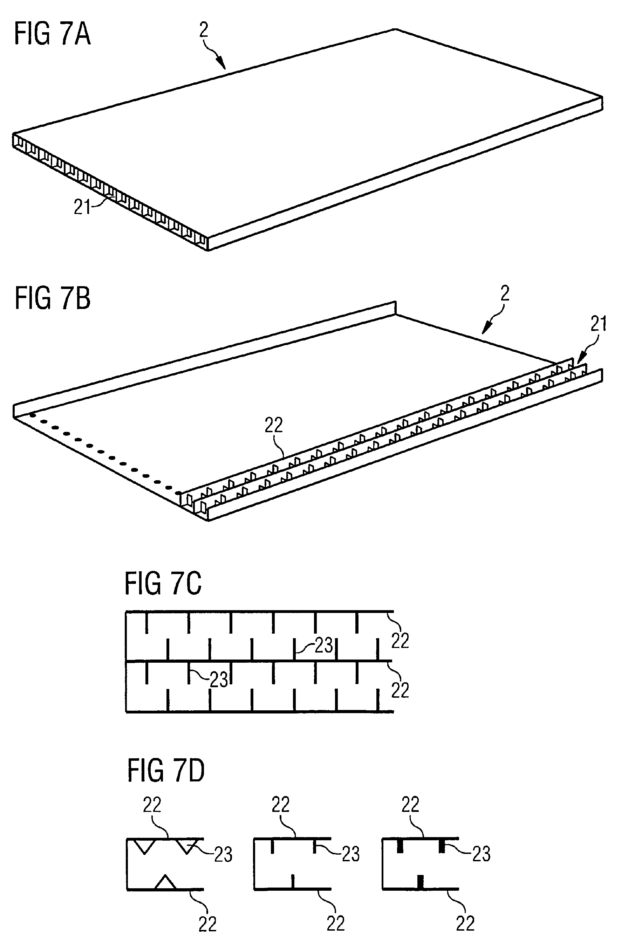

Die Figuren 7a bis 7d zeigen ein Ausführungsbeispiel einer Wandung des erfindungsgemäßen Computergehäuses. Die in der Figur 7a in einer Schrägansicht dargestellte Wandung 2 ist zur besseren Ansicht der im Inneren der Wandung 2 ausgebildeten Hohlschächte 21 in der Figur 7b ohne Decke des Hohlprofils der Wandung 2 dargestellt. Im Inneren der Wandung 2 sind parallel verlaufende Rippen 22 angeordnet. Die Rippen 22 weisen seitliche Ausbildungen 23 auf, die in der Figur 7c in einer Draufsicht der in der Figur 3 dargestellten Wandung 2 verdeutlicht sichtbar sind. Wie in der Figur 7d dargestellt, können diese Ausbildungen 23 verschiedene Formen, beispielsweise pyramidenartge oder verbreiterte Stege, aufweisen.

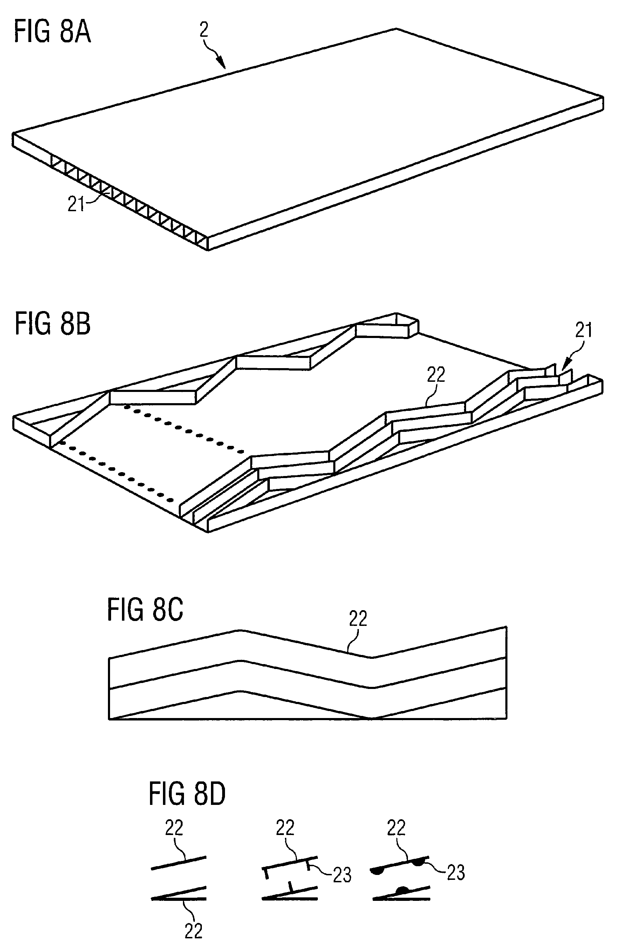

Ein weiteres Ausführungsbeispiel einer Wandung eines Computergehäuses ist in der Figur 8a bis 8d dargestellt. Die in der Figur 8a dargestellte Wandung 2 ist in einer Schrägansicht in der Figur 8b ebenfalls ohne Decke des Hohlprofils der Wandung 2 gezeigt. In dem Hohlprofil sind eine Vielzahl an parallel angeordneten Rippen 22 vorgesehen, die jedoch keinen geradlinigen Verlauf aufweisen. Die Draufsicht der Figur 8c der in der Figur 8b dargestellten Wandung 2 verdeutlicht, daß ein nicht geradliniger Verlauf der Rippen 22 zu einer Vergrößerung der Berührungsfläche bezogen auf einen einzelnen Luftkanal, der angesaugten Luft führt und daher einen erhöhten Wärmeaustausch bewirkt. Eine weitere Vergrößerung der Berührungsfläche wird durch an den Rippen 22 angeordnete Ausbildungen 23, wie in Figur 8d ausgeführt, erzielt. Ein intensiver Wärmeaustausch wird durch das Strömungsverhalten der Luftmoleküle bewirkt. Der nicht geradlinige Verlauf der Rippen 22 bedingt ein Vermischen der Luft und die Luftmoleküle stoßen aufgrund ihrer Trägheit gegen die Schräge der Rippen 22 und gleiten an der Schräg entlang.

Da das vorgeschlagene Computergehäuse für jeden Computer Verwendung finden kann, auch für Systeme wie Laptops, deren Rauminhalt zur Aufnahme aufwendiger Belüftungssysteme nicht geeignet ist, kann ein Fachmann entsprechend der Anforderung an die Architektur des Computers eine beliebige Wandung in vorab beschriebener Ausführung ausbilden.

### Bezugszeichenliste

- 1: Computergehäuse
- 2: Bodenwandung
- 3: Adapter
- 4: Seitenwandung
- 5: Deckenwandung
- 6: Netzteil
- 7: Lüfter
- 8: Leiterplatte
- 9: Festplatte
- 10: Steckkarte
- 11: Laufwerkseinschub
- 12: Heatpipe
- 21: Hohlschacht
- 22: Rippe
- 23: Ausbildung
- 24: Wärmeleitfähiges MAterial
- 31: Luftaustrittsöffnung des Adapters
- 32: Anschlußstutzen
- 33: Dichtung
- 34: Verbindungsstifte
- 35: Einkerbung
- 61: Luftaustrittsöffnung des Netzteils
- 71: Luftansaugöffnung des Lüfters
- 81: Prozessor
- 82: Baustein

## Patentansprüche

1. Computergehäuse (1) mit einer Bodenwandung (2), vier Seitenwandungen (4) und einer Deckenwand (5),
**dadurch gekennzeichnet, daß**
das Computergehäuse (1) so ausgebildet ist, daß innerhalb zumindest einer Wandung (2,) Kühlluft geführt wird.

2. Computergehäuse (1) nach Anspruch 1,
**dadurch gekennzeichnet**, d a β
die Wandung (2) als Hohlprofil mit zumindest einem Hohlschacht (21) ausgebildet ist.

3. Computergehäuse (1) nach Anspruch 1,
**dadurch gekennzeichnet**, d a β
die Wandung (2) einen Adapter (3) aufweist, der über am Adapter (3) angeordnete Anschlußstutzen (32) formschlüssig und luftdicht mit der Wandung (2) verbunden ist.

4. Computergehäuse (1) nach Anspruch 2 oder 3,
**dadurch gekennzeichnet, daß**
die Außenmaße der Anschlußstutzen (32) dem Innenmaß der Hohlschächte (21) des Hohlprofils der Wandung (2) entsprechen.

5. Computergehäuse (1) nach Anspruch 4,
**dadurch gekennzeichnet**, d a β
in jedem Hohlschacht (21) des Hohlprofils ein Anschlußstutzen (32) des Adapters (3) befestigt ist.

6. Computergehäuse (1) nach Anspruch 3,
**dadurch gekennzeichnet**, d a β
der Anschlußstutzen (32) zumindest eine Einkerbung (35) zum Ausgleich von Einbautoleranzen aufweist.

7. Computergehäuse (1) nach Anspruch 1,
**dadurch gekennzeichnet**, d a β
der Adapter (3) als Hohlprofil ausgebildet ist, in dem die aus dem Hohlprofil geführte Luft gesammelt wird und der Adapter (3) eine Luftaustrittsöffnung (31) aufweist, die dem Durchmesser der Luftansaugöffnung (71) eines Lüfters (7) entspricht.

8. Computergehäuse (1) nach einem der vorherigen Ansprüche,
**dadurch gekennzeichnet, daß**
die Luftaustrittsöffnung (31) des Adapters (3) von einer Dichtung (33) umgeben ist und die Luftaustrittsöffnung (31) luftdicht mit der Luftansaugöffnung (71) des Lüfters (7) verbindet.

9. Computergehäuse (1) nach einem der vorherigen Ansprüche,
**dadurch gekennzeichnet**, d a β
die Verbindung der Luftaustrittsöffnung (31) des Adapters (3) mit der Luftansaugöffnung (71) des Lüfters (7) über Verbindungsstifte (34) und/oder Schraubverbindungen des Adapters (3) zu einem den Lüfter (7) beinhaltendes Netzteil (6) erfolgt.

10. Computergehäuse (1) nach Anspruch 1,
**dadurch gekennzeichnet, daß**
die in der Wandung (2) parallel verlaufenden Rippen zur Ausbildung der Hohlprofilschächte Ausbildungen zur Vergrößerung der Berührungsfläche der innerhalb eines Hohlschachts (21) geführten Luft aufweisen.
